# EUROPÄISCHE PATENTSCHRIFT

(11) **EP 0 937 088 B1**
(45) Veröffentlichungstag und Bekanntmachung des Hinweises auf die Patenterteilung: **08.01.2003**
(21) Anmeldenummer: 97912214.0
(22) Anmeldetag: 23.10.1997
(51) Int. Cl.: C07F 9/40, C08K 5/5333, C07F 9/30, C07F 9/6568, C08K 5/5313, C08K 5/5393, C07F 9/48

(54) **VERFAHREN ZUR HERSTELLUNG VON ALUMINUMSALZEN ORGANISCHER PHOSPHORSÄUREN**
PROCESS FOR PREPARING ALUMINIUM SALTS OF ORGANIC PHOSPHORIC ACIDS
PROCEDE DE PREPARATION DE SELS D'ALUMINIUM D'ACIDES PHOSPHORIQUES ORGANIQUES

(30) Priorität: 04.11.1996 DE 19645125
(43) Veröffentlichungstag der Anmeldung: 25.08.1999
(73) Patentinhaber: Ticona GmbH, 65451 Kelsterbach (DE)
(72) Erfinder: KLEINER, Hans-Jerg, D-61476 Kronberg (DE); SEITZ, Thomas, D-68542 Heddesheim (DE)
(86) Internationale Anmeldenummer: EP9705855
(87) Internationale Veröffentlichungsnummer: WO98020012

(56) Entgegenhaltungen:
- EP-A- 0 327 496
- EP-A- 0 699 708
- BE-A- 700 042
- DE-A- 2 256 835
- DE-A- 2 915 116
- SHIHADA A -F ET AL: "PREPARATION AND VIBRATIONAL SPECTRA OF ME2SN(O2PME2)2, CL2SN(O2PME2)2 AND AL(O2PME2)3" ZEITSCHRIFT FUR NATURFORSCHUNG, TEIL B: ANORGANISCHE CHEMIE, ORGANISCHE CHEMIE, Bd. 46, Nr. 11, November 1991, Seiten 1568-1570, XP000674673
- CRISTOL H ET AL: "HYDROLYSE BASIQUE DE PHOSPHONATES I. ETUDE QUALITATIVE" JOURNAL OF ORGANOMETALLIC CHEMISTRY, Bd. 12, 1.Januar 1968, Seiten 459-470, XP000569133
- CHEMICAL ABSTRACTS, vol. 103, no. 22, 2.Dezember 1985 Columbus, Ohio, US; abstract no. 188347, ELISEEVA I I ET AL: "Reaction products of several organophosphorus compounds with metal halides" XP002054335 & ZH. NEORG. KHIM. (ZNOKAQ,0044457X);85; VOL.30 (8); PP.1987-93, VSES. NAUCHNO-ISSLED. INST. KHIM. SREDSTV ZASHCH. RAST.;USSR (SU),

## Beschreibung

Die Erfindung betrifft ein Verfahren zur Herstellung von Aluminiumsalzen organischer Phosphorsäuren. Im Einzelnen sind dies Phosphonsäurehalbester, Phosphinsäuren und phosphonige Säuren.

Die Aluminiumsalze dieser organischen Phosphorsäuren sind wertvolle Flammschutzmittel.
Aluminiumsalze von Phosphonsäurehalbestern wurden bisher durch Umsetzung von Aluminiumchlorid mit Phosphonsäurediestern (EP-OS 245 207), von elementarem Aluminium mit Phosphonsäurediestern (EP-OS 299 922) und von Aluminiumhydroxid mit Phosphonsäurediestern in Abwesenheit von Wasser bei 180°C (EP-OS327 496) hergestellt. Aluminiumsalze von Phosphinsäuren bzw. cyclischen Phosphinsäuren (1-Hydroxy-dihydrophospholoxide und 1-Hydroxyphospholanoxide) wurden bisher durch Umsetzung mit Aluminiumhydroxid in Wasser hergestellt (EP-A2-0 699 708). Salze cyclischer Phosphinsäuren sind auch durch Umsetzung mit Hydroxiden polyvalenter Metalle (u.a. Aluminiumhydroxid) in Wasser oder organischen Lösungsmitteln (u.a. Alkohole) erhältlich (BE-A-700 042).

Die Umsetzung von Phosphonsäurediestem mit Aluminiumchlorid, Aluminium oder Aluminiumhydroxid führt zwangsläufig zu unerwünschten Nebenprodukten wie Alkylchloriden, Alkoholen, Kohlenmonoxid, Ethylen, Ethan und niederen Dialkylethern. Außerdem müssen die Phosphonsäurediester in Überschüssen eingesetzt werden.
Die Umsetzung der organischen Phosphorsäuren in Wasser mit Aluminiumhydroxid ist an sich technisch einfach. Nachteilig ist die erforderliche lange Reaktionsdauer.

Es bestand daher ein Bedarf, ein Verfahren zu entwickeln, das die vorstehend genannten Nachteile vermeidet, sich technisch ohne großen Aufwand realisieren läßt und darüber hinaus die gewünschten Produkte sowohl in hoher Ausbeute als auch in hoher Reinheit zugänglich macht.

Diese Aufgabe wurde überraschenderweise gelöst durch ein Verfahren zur Herstellung von Aluminiumsalzen organischer Phosphorsäuren der allgemeinen Formel (I) 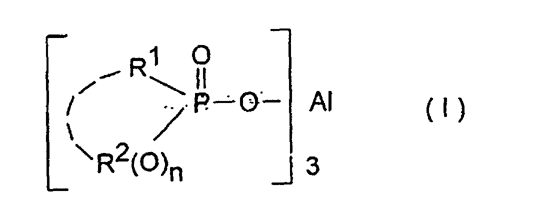 worin R¹ gesättigtes oder ungesättigtes oder unverzweigtes Alkyl mit C₁-C₈, bevorzugt C₁-C_{4,} oder Phenyl bedeutet,
wenn n = 0 ist
R² die gleiche Bedeutung wie R¹ hat oder Wasserstoff ist, wobei R¹ und R² auch zu einem gesättigten oder ungesättigten Ring verbunden sein können,
wenn n =1 ist
R² gesättigtes Alkyl mit C₁-C_{4,} bevorzugt C₁, bedeutet, dadurch gekennzeichnet, daß in Abwesenheit von Wasser organische Phosphorsäuren der allgemeinen Formel (II) 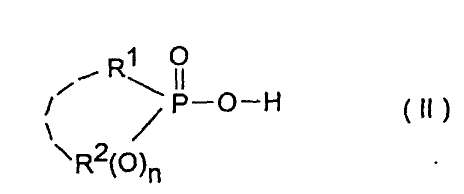 worin R¹, R² und n die oben angegebene Bedeutung haben, mit Aluminiumhydroxid in Gegenwart polarer Lösungsmittel umgesetzt werden.

Überraschenderweise hat sich gezeigt, daß das chemisch weitgehend inerte Aluminiumhydroxid in Gegenwart polarer Lösungsmittel schneller abreagiert.

Als organische Phosphorsäuren seien z.B. genannt:
1. Phosphonsäuremonoester: Methanphosphonsäuremonomethylester, Propanphosphonsäuremonomethylester, Ethanphosphonsäuremonoethylester, Phenylphosphonsäure-mono-npropylester.
2. Phosphinsäuren: Dimethylphosphinsäure, Ethyl-methylphosphinsäure, Propylmethylphosphinsäure, Methyl-phenylphosphinsäure.
3. Cyclische Phosphinsäuren: 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1Hphosphol-1-oxid, 1-Hydroxy-1H-phospholan-1-oxid und 1-hydroxy-3-methyl-1H-phospholan-1-oxid.
4. Phosphonige Säuren: Methanphosphonige Säure, propanphosphonige Säure, octanphosphonige Säure, phenylphosphonige Säure.

Als polare Lösungsmittel seien besonders genannt:
Essigsäure, Propionsäure, Methanol, Ethanol, Propanol, Butanol, Aceton, Methylethylketon, Tetrahydrofuran-, Dioxan, Acetonitril. Besonders bevorzugt sind Essigsäure und Isopropanol.
Die Lösungsmittel können auch als Gemische eingesetzt werden.
Die Reaktionstemperaturen betragen 50 bis 200°C, bevorzugt 70 bis 100°C. Bevorzugt wird unter Rückflußbedingungen gearbeitet. Bei höheren Temperaturen wird gegebenenfalls unter Druck gearbeitet.
Die Reaktionskomponenten können mit den Lösungsmitteln gemischt werden und werden dann in der Regel einige Stunden bei der gewünschten Reaktionstemperatur gerührt. Es kann auch vorteilhaft sein, das Lösungsmittel oder Lösungsmittelgemisch mit Aluminiumhydroxid vorzulegen und die organische Phosphorsäure langsam unter ständigem Rühren bei der Reaktionstemperatur einzudosieren. Nach beendeter Umsetzung wird abgesaugt und das arnallende Aluminiumsalz getrocknet. Bei dem Verfahren vorliegender Erfindung fallen die Aluminiumsaize feinkörnig mit einer mittleren Korngröße von 2 bis 25 µm an ein Mahlen dieser Salze nach der Trocknung ist daher für Kunststoff-Compoundierungen nicht erforderlich.

### Beispiel 1

### Aluminiumsalz des Methanphosphonsäuremonomethylesters (Herstellung nicht erfindungsgemäss)

99 g (0,9 Mol) Methanphosphonsäuremonomethylester, 23,4 g (0,3 Mol) Aluminiumhydroxid und 330 ml Wasser/Lösungsmittelgemisch werden bei der Reaktionstemperatur während der Reaktionsdauer gerührt, dann wird abgesaugt, mit dem Wasser/Lösungsmittelgemisch gewaschen, bei 140-150°C im Vakuum-Trockenschrank getrocknet. Man erhält das Reaktionsprodukt

| Nr. | Wasser/Lösungsmittelgemisch | Reaktiontemperatur [°C] | Reaktionsdauer [h] | Ausbeute [g] | % d.Th. |
|---|---|---|---|---|---|
| a | Wasser / Isopropanol 1:1 | 75 | 24 | 96,7 | 91 |
| b | Wasser / Isopropanol 1:1 | 75 | 12 | 97,5 | 92 |
| c | Wasser / Essigsäure 1:1 | 80-90 | 24 | 92,9 | 87,5 |

### Beispiel 2

### Aluminiumsalz der Ethyl-methylphosphinsäure mit Essigsäure bzw. Propionsäure als Lösungsmittel

54 g (0,5 Mol) Ethyl-methylphosphinsäure, 13 g (0,167 Mol) Aluminiumhydroxid und 154 ml Lösungsmittel bzw. -Gemisch werden bei der Reaktionstemperatur während der Reaktionsdauer gerührt, dann wird gekühlt und abgesaugt. Man erhält nach Trocknungbei 140-150°C im Vakuum-Trockenschrank das Reaktionsprodukt.

| Nr. | Wasser/Lösungsmittelgemisch | Rektionstemperatur [°C] | Reaktionsdauer [h] | Ausbeute [g] | % d.Th. |
|---|---|---|---|---|---|
| a | Essigsäure | 105 | 4,5 | 54 | 93 |
| b* | Essigsäure / Wasser 2:1 | 86 | 5 | 50,1 | 86 |
| c | Propionsäure | 115-120 | 5 | 52,2 | 90 |

| | | | | | |
|---|---|---|---|---|---|
| * nicht erfindungsgemäss | | | | | |

### Beispiel 3

### Aluminiumsalz der Ethyl-methylphosphinsäure mit weiteren polaren Lösungsmitteln

108 g (1,0 Mol) Ethyl-methylphosphinsäure, 26 g (0,333 Mol)Aluminiumhydroxid und 324 ml Lösungsmittel bzw. -Gemisch werden bei der Reaktionstemperatur während der Reaktionsdauer gerührt, dann wird gekühlt, abgesaugt und getrocknet.

| Nr. | Wasser/Lösungsmittelgemisch | Rektionstemperatur [°C] | Reaktionsdauer [h] | Ausbeute [g] | % d.Th. |
|---|---|---|---|---|---|
| a | Isopropanol | 85 | 24 | 92,5 | 80 |
| b* | Isopropanol / Wasser 1:1 | 85 | 7,5 | 110,9 | 96 |
| c* | Methanol/Wasser | 80 | 24 | 100,8 | 88 |

| | | | | | |
|---|---|---|---|---|---|
| *nicht erfindungsgemäss | | | | | |

### Beispiel 4

### Aluminiumsalz der Ethyl-methylphosphinsäure

130 g (1,67 Mol) Aluminiumhydroxid und 1620 ml Essigsäure werden unter Rühren bis zum Rückfluß erhitzt und 540 g (5,0 Mol) Ethyl-methylphosphinsäure während 3,5 Stunden zugetropft. Dann wird ca. 4 Stunden weiter am Rückfluß gehalten. Es wird abgesaugt und im Vakuum-Trockenschrank bei 140°C getrocknet. Man erhält 573 g. Das entspricht einer Ausbeute von 98,6 % d.Th.

### Beispiel 5

### Aluminiumsalz der Methyl-propylphosphinsäure

91,5 g (0,75 Mol) Methyl-propylphosphinsäure werden in 240 ml Essigsäure gelöst und 19,5 g (0,25 Mol) Aluminiumhydroxid zugegeben. Dann wird unter Rühren 5 Stunden lang auf 110°C erhitzt, abgekühlt und abgesaugt. Man erhält nach Trocknung im Vakuum-Trockenschrank bei 140°C 85 g. Das entspricht einer Ausbeute von 87 % d. Th.

### Beispiel 6

### Aluminiumsalz des 1-Hydroxy-1H-phospholan-1-oxids

10 g (0,083 Mol) 1-Hydroxy-1H-phospholan-1-oxid und 2,2 g (0,028 Mol) Aluminiumhydroxid werden in 28 ml Essigsäure 1,5 Stunden bei 105°C gerührt. Dann wird abgesaugt. Man erhält 10,5 g, die nach Trocknung bis 360°C nicht schmelzen. Das entspricht einer Ausbeute von 98 % d. Th.

### Beispiel 7

### Aluminiumsalz des 1-Hydroxy-3-methyl-1H-phospholan-1-oxids

26,8 g (0,200 Mol) 1-Hydroxy-3-methyl-1H-phospholan-1-oxid und 5,2 g (0,067 Mol) Aluminiumhydroxid werden in 33 g Essigsäure 4 Stunden bei 105°C gerührt. Dann wird abgesaugt. Man erhält 26,2 g, die nach Trocknung bis 360°C nicht schmelzen. Das entspricht einer Ausbeute von 92 % d.Th.

### Beispiel 8

### Aluminiumsalz des 1-hydroxy-2,5-dihydro-1H-phosphol-1-oxids

10 g (0,085 Mol) 1-Hydroxy-2,5-dihydro-1H-phosphol-1-oxid und 2,2 g (0,028 Mol) Aluminiumhydroxid werden in 28 ml Essigsäure 1,5 Stunden bei 105°C gerührt. Dann wird abgesaugt. Man erhält 10,5 g, die nach Trocknung bis 360°C nicht schmelzen. Das entspricht einer Ausbeute von 97 % d. Th.

### Beispiel 9

### Aluminiumsalz der methanphosphonigen Säure

80 g (1,0 Mol) methanphosphonige Säure werden in 110 ml Essigsäure gelöst und unter Rühren 26 g (0,33 Mol) Aluminiumhydroxid zugegeben. Dann wird auf 110°C während 5 Stunden erhitzt. Man erhält nach dem Abkühlen und Absaugen sowie nach Trocknung bei 140°C im Vakuum-Trockenschrank 82,7 g. Das entspricht einer Ausbeute von 94 % d. Th.

## Patentansprüche

1. Verfahren zur Herstellung von Aluminiumsalzen organischer Phosphorsäuren der allgemeinen Formel (I) 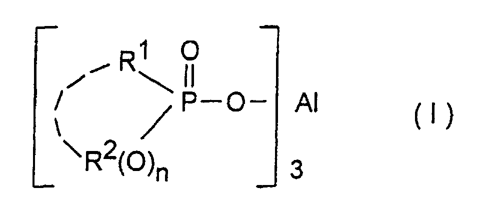 worin R¹ gesättigtes oder ungesättigtes oder unverzweigtes Alkyl mit C₁-C₈, bevorzugt C₁-C_{4,} oder Phenyl bedeutet,
wenn n = 0 ist
R² die gleiche Bedeutung wie R¹ hat oder Wasserstoff ist, wobei R¹ und R² auch zu einem gesättigten oder ungesättigten Ring verbunden sein können,
wenn n =1 ist
R² gesättigtes Alkyl mit C₁-C_{4,} bevorzugt C₁, bedeutet, **dadurch gekennzeichnet, daß** in Abwesenheit von Wasser organische Phosphorsäuren der allgemeinen Formel (II) 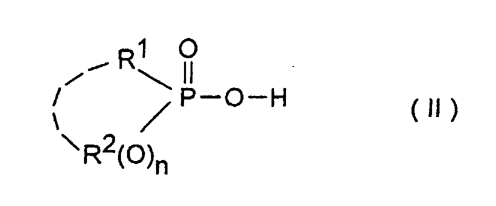 worin R¹, R² und n die oben angegebene Bedeutung haben, mit Aluminiumhydroxid in Gegenwart polarer Lösungsmittel umgesetzt werden, wobei
als polares Lösemittel Essigsäure, Propionsäure, Methanol, Ethanol, n-Propanol, Isopropanol, Butanol, Aceton, Methylethylketon, Tetrahydrofuran, Dioxan oder Acetonitril eingesetzt wird.

2. Verfahren gemäß Anspruch 1, wobei als organische Phosphorsäure der Formel I Methanphosphonsäuremonomethylester, Propanphosphonsäuremonomethylester, Ethanphosphonsäuremonoethylester, Phenylphosphonsäure-mono-npropylester, Dimethylphosphinsäure, Ethyl-methylphosphinsäure, Propylmethylphosphinsäure, Methyl-phenylphosphinsäure, 1-Hydroxy-3-methyl-2,5-dihydro-1H-phosphol-1-oxid, 1-Hydroxy-2,3-dihydro-1H-phosphol-1-oxid, 1-Hydroxy-2,5-dihydro-1Hphosphol-1-oxid, 1-Hydroxy-1H-phospholan-1-oxid und 1-hydroxy-3-methyl-1H-phospholan-1-oxid, Methanphosphonige Säure, propanphosphonige Säure, octanphosphonige Säure oder phenylphosphonige Säure eingesetzt werden.

3. Verfahren gemäß Anspruch 1 oder 2, **dadurch gekennzeichnet, daß** als polares Lösungsmittel Essigsäure, Propionsäure, Methanol oder Isopropanol eingesetzt wird.

4. Verfahren gemäß einem der Ansprüche 1 bis 3, **dadurch gekennzeichnet, daß** als polares Lösungsmittel Essigsäure, Ethanol oder Propanol eingesetzt wird.

5. Verfahren gemäß einem der Ansprüche 1 bis 4, **dadurch gekennzeichnet, daß** ein Lösemittel-Gemisch eingesetzt wird, das mindestens zwei oder mehrere polare Lösemittel enthält.

6. Verfahren gemäß einem der Ansprüche 1 bis 5, **dadurch gekennzeichnet, daß** das Verfahren bei einer Reaktionstemperatur im Bereich von 50° C bis 200° C durchgeführt wird.

7. Verfahren gemäß einem der Ansprüche 1 bis 6, **dadurch gekennzeichnet, daß** bei dem Verfahren Salze organischer Phosphorsäuren mit einer mittleren Korngröße von 2 bis 25 µm gebildet werden.

8. Verwendung der nach Ansprüchen 1 bis 7 gebildeten Salze organischer Phosphorsäuren als Flammschutzmittel.

9. Verwendung der nach Ansprüchen 1 bis 8 gebildeten Salze organischer Phosphorsäuren als Flammschutzmittel für Kunststoffe, die mindestens einen Polyester, mindestens ein Polyamid oder mindestens ein Polyolefin enthalten.

## Claims

1. A process for the preparation of aluminum salts of organic phosphoric acids of the formula (I) 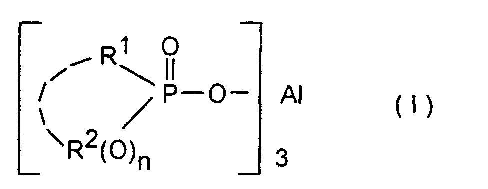 where R¹ is a saturated or unsaturated or unbranched C₁-C₈, preferably C₁-C_{4,} alkyl, or phenyl,
when n = 0
R² is as defined for R¹ or is hydrogen, it also being possible for R¹ and R² to be joined to give a saturated or unsaturated ring,
when n =1
R² is a saturated C₁-C_{4,} preferably C₁, alkyl, which comprises reacting, in the absence of water, organic acids of phosphorus of the formula (II) 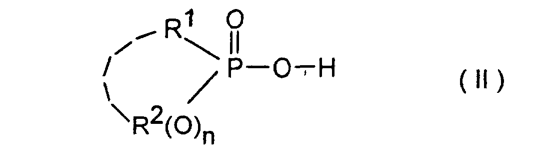 where R¹, R² and n are as defined above, with aluminum hydroxide in the presence of polar solvents, where the polar solvent used is acetic acid, propionic acid, methanol, ethanol, n-propanol, isopropanol, butanol, acetone, methyl ethyl ketone, tetrahydrofuran, dioxane and acetonitrile.

2. The process as claimed in claim 1, where the organic acid of phosphorus of the formula I used is monomethyl methanephosphonate, monomethyl propanephosphonate, monoethyl ethanephosphonate, mono-n-propyl phenylphosphonate, dimethylphosphinic acid, ethylmethylphosphinic acid, propylmethylphosphinic acid, methylphenylphosphinic acid, 1-hydroxy-3-methyl-2,5-dihydro-1H-phosphole 1-oxide, 1-hydroxy-2,3-dihydro-1H-phosphole 1-oxide, 1-hydroxy-2,5-dihydro-1H-phosphole 1-oxide, 1-hydroxy-1H-phospholane 1-oxide and 1-hydroxy-3-methyl-1H-phospholane 1-oxide, methanephosphonous acid, propanephosphonous acid, octanephosphonous acid or phenylphosphonous acid.

3. The process as claimed in claim 1 or 2, wherein the polar solvent used is acetic acid, propionic acid, methanol or isopropanol.

4. The process as claimed in one of claims 1 to 3, wherein the polar solvent used is acetic acid, ethanol or propanol.

5. The process as claimed in one of claims 1 to 4, wherein a solvent mixture is used which contains at least two or more polar solvents.

6. The process as claimed in one of claims 1 to 5, wherein the process is carried out at a reaction temperature in the range from 50°C to 200°C.

7. The process as claimed in one of claims 1 to 6, wherein salts of organic acids of phosphorus with a mean particle size of from 2 to 25 µm are formed in the process.

8. The use of the salts of organic acids of phosphorus formed as claimed in claims 1 to 7 as flame retardants.

9. The use of the salts of organic acids of phosphorus formed as claimed in claims 1 to 8 as flame retardants for plastics which contain at least one polyester, at least one polyamide or at least one polyolefin.

## Revendications

1. Procédé pour la préparation de sels d'aluminium d'acides phosphoriques organiques, de formule générale (I) 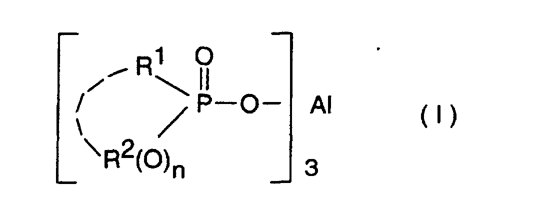 dans laquelle R¹ représente un groupe alkyle en C₁-C₈, de préférence en C₁-C₄, saturé ou insaturé ou non ramifié ou un groupe phényle,
lorsque n = 0
R² a la même signification que R¹ ou est un atome d'hydrogène, R¹ et R² pouvant également être liés en un cycle saturé ou insaturé,
lorsque n = 1
R² représente un groupe alkyle saturé en C₁-C₄, de préférence en C₁,
**caractérisé en ce qu'**on fait réagir en l'absence d'eau des acides phosphoriques organiques de formule générale (II) 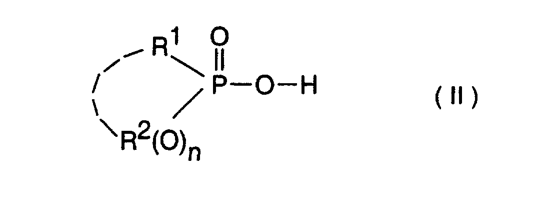 dans laquelle R¹, R² et n ont les significations données ci-dessus, avec de l'hydroxyde d'aluminium, en présence de solvants polaires,
en utilisant comme solvant polaire l'acide acétique, l'acide propionique, le méthanol, l'éthanol, le n-propanol, l'isopropanol, le butanol, l'acétone, la méthyléthylcétone, le tétrahydrofuranne, le dioxanne ou l'acétonitrile.

2. Procédé selon la revendication 1, dans lequel on utilise en tant qu'acide phosphorique organique de formule II
le méthanephosphonate de monométhyle, le propanephosphonate de monométhyle, l'éthanephosphonate de monoéthyle, le phénylphosphonate de mono-n-propyle, l'acide diméthylphosphinique, l'acide éthylméthylphosphinique, l'acide propylméthylphosphinique, l'acide méthylphénylphosphinique, le 1-hydroxy-3-méthyl-2,5-dihydro-1H-phosphol-1-oxyde, le l-hydroxy-2,3-dihydro-1H-phosphol-1-oxyde, le 1-hydroxy-2,5-dihydro-1H-phosphol-1-oxyde, le 1-hydroxy-1H-phospholan-l-oxyde et le 1-hydroxy-3-méthyl-1H-phospholan-1-oxyde, l'acide méthanephosphoneux, l'acide propanephosphoneux, l'acide octanephosphoneux ou l'acide phénylphosphoneux.

3. Procédé selon la revendication 1 ou 2, **caractérisé en ce qu'**on utilise comme solvant polaire l'acide acétique, l'acide propionique, le méthanol ou l'isopropanol.

4. Procédé selon l'une quelconque des revendications 1 à 3, **caractérisé en ce qu'**on utilise comme solvant polaire l'acide acétique, l'éthanol ou le propanol.

5. Procédé selon l'une quelconque des revendications 1 à 4, **caractérisé en ce qu'**on utilise un mélange de solvants qui contient au moins deux solvants polaires ou plus.

6. Procédé selon l'une quelconque des revendications 1 à 5, **caractérisé en ce qu'**on effectue le procédé à une température de réaction dans la plage de 50°C à 200°C.

7. Procédé selon l'une quelconque des revendications 1 à 6, **caractérisé en ce que** des sels d'acides phosphoriques organiques ayant une taille moyenne de grain de 2 à 25 µm sont formés dans le procédé.

8. Utilisation des sels d'acides phosphoriques organiques formés selon les revendications 1 à 7, en tant qu'agent ignifuge.

9. Utilisation des sels d'acides phosphoriques organiques formés selon les revendications 1 à 8, en tant qu'agent ignifuge pour matières plastiques qui comportent au moins un polyester, au moins un polyamide ou au moins une polyoléfine.
